(19) Europäisches Patentamt / European Patent Office / Office européen des brevets

(11) **EP 4 141 808 A1**

(12) **EUROPEAN PATENT APPLICATION**

(43) Date of publication:
**01.03.2023 Bulletin 2023/09**

(21) Application number: **21192740.5**

(22) Date of filing: **24.08.2021**

(51) International Patent Classification (IPC):
**G06V 10/82** (2022.01)

(52) Cooperative Patent Classification (CPC):
**G06V 10/82**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Robert Bosch GmbH**
**70442 Stuttgart (DE)**

(72) Inventors:
• **Schmidt, Frank**
**71229 Leonberg (DE)**
• **Schmidgall, Markus**
**70771 Leinfelden-Echterdingen (DE)**

Remarks:
Amended claims in accordance with Rule 137(2) EPC.

(54) **DENOISING LAYER FOR NEURAL NETWORKS FOR IMAGE ANALYSIS**

(57) Neural network (60) configured for determining an output signal (y) characterizing an analysis of an image (x), wherein determining the output signal (y) is based on an output determined by a denoising layer of the neural network (60), wherein the output is determined for an input of the denoising layer, wherein the input is based on the image (x), and wherein magnitudes of local gradients of the output do not exceed a predefined first threshold and a distance from the output to the input of the layer does not exceed a predefined second threshold.

**Fig. 1**

EP 4 141 808 A1

**Description**

Technical background

The invention concerns a neural network comprising a denoising layer, a method for analyzing an image with the neural network, a method for training the neural network, a training system, a computer program, and a machine-readable storage medium.

Prior art

Xie et al. "Feature Denoising for Improving Adversarial Robustness", 2019, Comp. Soc. Conf. on Computer Vision and Pattern Recognition, available online https://openaccess.thecvf.com/content_CVPR_2019/papers/Xie_Feature_Denois ing_for_Improving_Adversarial_Robustness_CVPR_2019_paper.pdf discloses a denoising layer.

Advantages of the invention

Neural networks for image analysis find application in various fields of technology such as robots, manufacturing, or medicine. A recurring challenge for the robustness of such neural networks are adversarial examples. Typically, an adversarial example is obtained by applying a carefully designed perturbation or noise to an image in order to maliciously fool the neural network into determining an incorrect analysis, e.g., an incorrect classification.

Various methods for defending against adversarial examples have been proposed. A very effective method for defending against adversarial examples is to denoise an input image for a neural network by means of a denoising layer.

The inventors found that by carefully designing a new denoising layer, defenses against adversarial examples can be improved even further.

Disclosure of the invention

In a first aspect, the invention concerns a neural network configured for determining an output signal characterizing an analysis of an image, wherein determining the output signal is based on an output determined by a denoising layer of the neural network, wherein the output is determined for an input of the denoising layer, wherein the input is based on the image, and wherein magnitudes of local gradients of the output do not exceed a predefined first threshold and a distance from the output to the input of the layer does not exceed a predefined second threshold.

The neural network may be understood as a data processing device that takes as input an input signal characterizing the image and determines an output signal characterizing an analysis of the image.

The image may especially be obtained from an optical sensor, e.g., a camera, a LIDAR sensor, a radar sensor, an ultrasonic sensor, or a thermal camera.

The analysis may, for example, characterize a classification of the image, e.g., a multiclass classification, a multi-label classification, a semantic segmentation, or an object detection. Alternatively or additionally, the analysis may also characterize a regression result, i.e., the result of performing a regression analysis based on the image. The analysis may also determine a probability or a likelihood or a log-likelihood as result, e.g., in case the neural network is a normalizing flow.

The denoising layer may be placed at any position within the architecture of layers of the neural network. Preferably, the denoising layer is used as an input layer of the neural network, i.e., the denoising layer accepts as input the image directly. Alternatively, it is also possible that the denoising layer takes as input an output of another layer, wherein the other layer is preferably a convolutional layer.

The input of the denoising layer may preferably be given in the form of a three-dimensional tensor. For example, if the input is the image, the tensor may characterize a width and height of the image by a width dimension and height dimension respectively. Additionally, the tensor may characterize the number of channels of the image in a channel dimension, which can also be referred to as depth dimension. If the input is an output of a convolutional layer, the depth dimension may characterize the number of filters of the convolutional layer. In general, the tensor can be understood as a collection of feature vectors located along a two-dimensional grid. For the image, the feature vector may, for example, characterize RGB values of a pixel at a certain position. For the output of the convolutional layer, the feature vector may characterize a representation of a pixel of the image at a same location of the feature map or it may characterize a representation of a plurality of pixels in a local neighborhood around the pixel.

Advantageously, the denoising layer can be seen as an adaptive filter for filtering out high frequencies, which are usually obtained when applying adversarial perturbations such as adversarial noise to an image. The authors found that this filtering improves the robustness of the neural network against adversarial examples.

The denoising layer may especially denoise the input based on gradients of the input of the denoising layer. Preferably, the layer output is a result of solving a constrained optimization problem, wherein the objective function is characterized by local gradients of the layer output and the first threshold and a constrained is characterized by the distance and the second threshold.

Advantageously, determining the output of the denoising layer by a constrained optimization problem allows for finding a desirable output that fits the desired constraints, i.e., being able to remove adversarial perturbations while staying as close as desired to the original input of the denoising layer. Advantageously, this approach gives more control over the denoising process by means of the first threshold and the second threshold, which can be understood as hyperparameters of the denoising layer and as a consequence as hyperparameters of the neural network. The inventors found that this improves the ability of the neural network to defend against adversarial examples even further.

Preferably, the constrained optimization problem is characterized by the formula:

$$\underset{J}{\arg\min} \int \max(\|\nabla J(x)\|_2, \alpha)\mathrm{d}x$$

$$s.t. \|J - I\|_2^2 \le \rho^2.$$

In the formula, $J$ characterizes a channel of the output of the denoising layer, $\nabla J(x)$ characterizes a local gradient of the output at a width and height location $x$, $\alpha$ characterizes the first threshold, $\rho$ characterizes the second threshold and $I$ characterizes the input of the denoising layer.

If the input of the denoising layer comprises more than one channel, the constrained optimization problem may be solved for each channel individually. The output of the denoising layer may especially have as many channels as the input of the denoising layer.

The constraint optimization problem may especially be solved by applying a first-order primal-dual algorithm for convex problems as, e.g., proposed by Chambolle and Pock "A First-Order Primal-Dual Algorithm for Convex Problems with Applications to Imaging", 2010, available at https://link.springer.com/content/pdf/10.1007/s10851-010-0251-1.pdf.

In another aspect, the invention concerns a computer-implemented method for determining an output signal characterizing an analysis of an image, where the output signal is determined by providing the image to a neural network according to any embodiment as presented above.

The method derives its advantageous properties from the neural network directly, i.e., the method for analyzing the image is more robust against adversarial examples.

In another aspect, the invention concerns a computer-implemented method for training a neural network according to any embodiment as presented above, wherein training is based on a gradient descent algorithm. For such a training, a gradient of the denoising layer may need to be determined, especially if the denoising layer is not used as input layer of the neural network or if gradients with respect to some loss function shall be propagated back to the input image, e.g., when using visualization methods such as Grad-CAM.

Preferably, the gradient is determined without the need of tracking and backpropagating all forward interactions which would be extremely memory consuming and computationally demanding.

The inventors found that for the gradient calculation of the denoising layer one can make use of the primal-dual formulation of the optimization problem stated above, which is characterized by the formula:

$$\min_{J,\lambda} \max_{g,\mu} \langle \nabla J, g \rangle + \alpha \langle 1, 1 - \|g\| \rangle + \langle \lambda, 1 - \|g\|^2 \rangle + \mu(\|J - I\|_2^2 - \rho^2).$$

The inventors found further, that one can use the KKT condition that holds for any solution $(g^*, \lambda^*, J^*, \mu^*)$ of this problem to derive an analytical expression for the gradient.

Hence, a gradient of the denoising layer is preferably determined according to the formula

$$\mathrm{D}J^T\eta = 2\mu^\star\xi_1 + 2(\delta^\star)^T\xi_2$$

with

$$\delta^\star = J^\star - I,$$

$$\xi_1 = \frac{(\delta^\star)^T L^{-1}\eta}{2(\delta^\star)^T L^{-1}\delta^\star},$$

$$\xi_2 = L^{-1}\eta - 2L^{-1}\delta^\star\xi_1,$$

$$L := 2\mu^\star - \mathrm{div}\left(\frac{1}{2\lambda^\star + \alpha}\pi_{g^\star}\right)\nabla.$$

This gradient calculation requires solving two linear systems of equations for $L^{-1}{}_\eta$ and $L^{-1}\delta^\star$. As $L$ is symmetrical and positive definite, a conjugate gradient method may be used for this purpose.

Embodiments of the invention will be discussed with reference to the following figures in more detail. The figures show:

Figure 1    a control system comprising a classifier controlling an actuator in its environment;

Figure 2    the control system controlling an at least partially autonomous robot;

Figure 3    the control system controlling a manufacturing machine;

Figure 4    the control system controlling an automated personal assistant;

Figure 5    the control system controlling an access control system;

Figure 6    the control system controlling a surveillance system;

Figure 7    the control system controlling an imaging system;

Figure 8    the control system controlling a medical analysis system;

Figure 9    a training system for training the classifier.

Description of the embodiments

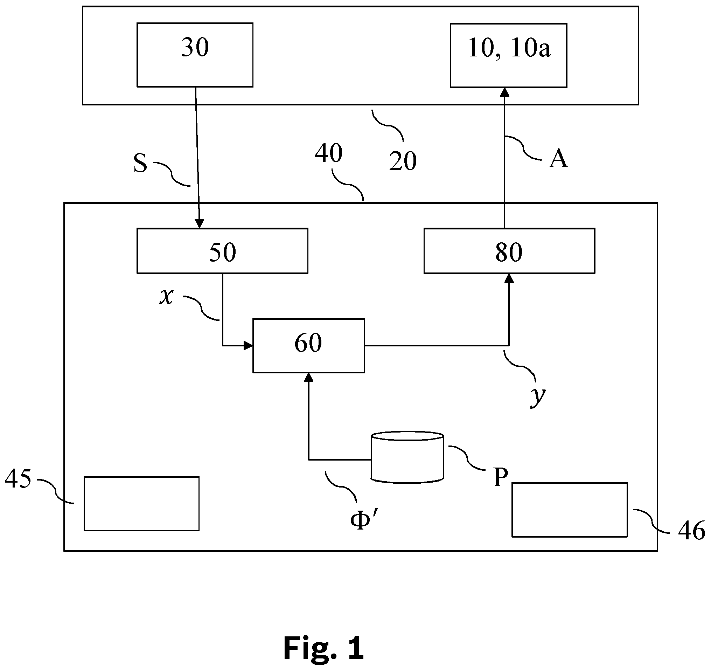

Figure 1 shows an embodiment of an actuator (10) in its environment (20). The actuator (10) interacts with a control system (40). The actuator (10) and its environment (20) will be jointly called actuator system. At preferably evenly spaced points in time, a sensor (30) senses a condition of the actuator system. The sensor (30) may comprise several sensors. Preferably, the sensor (30) is an optical sensor that takes images of the environment (20). An output signal (S) of the sensor (30) (or, in case the sensor (30) comprises a plurality of sensors, an output signal (S) for each of the sensors) which encodes the sensed condition is transmitted to the control system (40).

Thereby, the control system (40) receives a stream of sensor signals (S). It then computes a series of control signals (A) depending on the stream of sensor signals (S), which are then transmitted to the actuator (10).

The control system (40) receives the stream of sensor signals (S) of the sensor (30) in an optional receiving unit (50). The receiving unit (50) transforms the sensor signals (S) into input signals ($x$). Alternatively, in case of no receiving unit (50), each sensor signal (S) may directly be taken as an input signal ($x$). The input signal ($x$) may, for example, be given as an excerpt from the sensor signal (S). Alternatively, the sensor signal (S) may be processed to yield the input signal ($x$). In other words, the input signal ($x$) is provided in accordance with the sensor signal (S).

The input signal ($x$) is then passed on to a neural network (60). The classifier (60) may preferably comprise a denoising layer as input layer of the neural network (60). Alternatively or additionally, the neural network may also comprise a denoising layer as a hidden. The denoising layer or the denoising layers each determined their respective output by optimizing the constraint optimization problem

$$\underset{J}{\mathrm{argmin}} \int \max(\|\nabla J(x)\|_2, \alpha)\mathrm{d}x$$

$$s.\,t.\,\|J - I\|_2^2 \leq \rho^2.$$

In the formula, $J$ characterizes the output of the respective denoising layer, $\nabla J(x)$ characterizes a local gradient of the output at a width and height location $x$, $\alpha$ characterizes a predefined first threshold, $\rho$ characterizes a predefined second threshold and $I$ characterizes the input of the denoising layer. The optimization problem is solved using a first-order primal-dual algorithm for convex problems.

The neural network (60) is parametrized by parameters ($\Phi$), which are stored in and provided by a parameter storage ($St_1$).

The neural network (60) determines an output signal ($y$) from the input signals ($x$). The output signal ($y$) comprises information that assigns one or more labels to the input signal ($x$). The output signal ($y$) is transmitted to an optional conversion unit (80), which converts the output signal ($y$) into the control signals (A). The control signals (A) are then transmitted to the actuator (10) for controlling the actuator (10) accordingly. Alternatively, the output signal ($y$) may directly be taken as control signal (A).

The actuator (10) receives control signals (A), is controlled accordingly and carries out an action corresponding to the control signal (A). The actuator (10) may comprise a control logic which transforms the control signal (A) into a further control signal, which is then used to control actuator (10).

In further embodiments, the control system (40) may comprise the sensor (30). In even further embodiments, the control system (40) alternatively or additionally may comprise an actuator (10).

In still further embodiments, it can be envisioned that the control system (40) controls a display (10a) instead of or in addition to the actuator (10).

Furthermore, the control system (40) may comprise at least one processor (45) and at least one machine-readable storage medium (46) on which instructions are stored which, if carried out, cause the control system (40) to carry out a method according to an aspect of the invention.

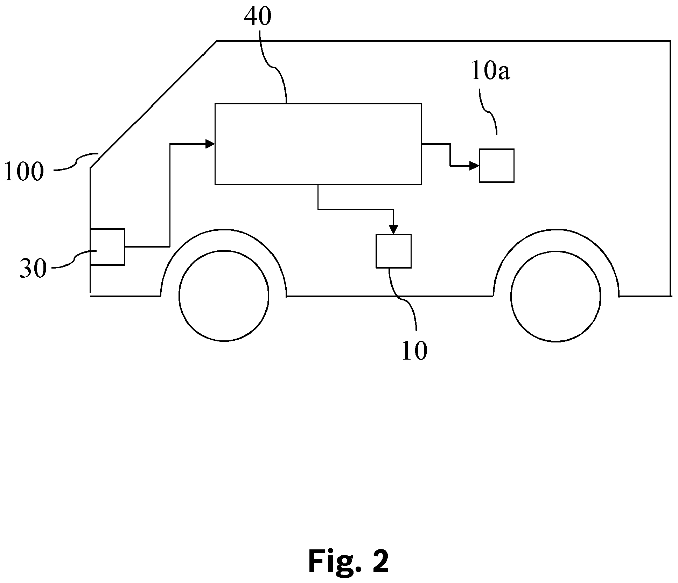

Figure 2 shows an embodiment in which the control system (40) is used to control an at least partially autonomous robot, e.g., an at least partially autonomous vehicle (100).

The sensor (30) may comprise one or more video sensors and/or one or more radar sensors and/or one or more ultrasonic sensors and/or one or more LiDAR sensors. Some or all of these sensors are preferably but not necessarily integrated in the vehicle (100). The input signal ($x$) may hence be understood as an input image and the neural network (60) as an image classifier.

The image classifier (60) may be configured to detect objects in the vicinity of the at least partially autonomous robot based on the input image ($x$). The output signal ($y$) may comprise an information, which characterizes where objects are located in the vicinity of the at least partially autonomous robot. The control signal (A) may then be determined in accordance with this information, for example to avoid collisions with the detected objects.

The actuator (10), which is preferably integrated in the vehicle (100), may be given by a brake, a propulsion system, an engine, a drivetrain, or a steering of the vehicle (100). The control signal (A) may be determined such that the actuator (10) is controlled such that vehicle (100) avoids collisions with the detected objects. The detected objects may also be classified according to what the image classifier (60) deems them most likely to be, e.g., pedestrians or trees, and the control signal (A) may be determined depending on the classification.

Alternatively or additionally, the control signal (A) may also be used to control the display (10a), e.g., for displaying the objects detected by the image classifier (60). It can also be imagined that the control signal (A) may control the display (10a) such that it produces a warning signal, if the vehicle (100) is close to colliding with at least one of the detected objects. The warning signal may be a warning sound and/or a haptic signal, e.g., a vibration of a steering wheel of the vehicle.

In further embodiments, the at least partially autonomous robot may be given by another mobile robot (not shown), which may, for example, move by flying, swimming, diving, or stepping. The mobile robot may, inter alia, be an at least partially autonomous lawn mower, or an at least partially autonomous cleaning robot. In all of the above embodiments, the control signal (A) may be determined such that propulsion unit and/or steering and/or brake of the mobile robot are controlled such that the mobile robot may avoid collisions with said identified objects.

In a further embodiment, the at least partially autonomous robot may be given by a gardening robot (not shown), which uses the sensor (30), preferably an optical sensor, to determine a state of plants in the environment (20). The actuator (10) may control a nozzle for spraying liquids and/or a cutting device, e.g., a blade. Depending on an identified species and/or an identified state of the plants, an control signal (A) may be determined to cause the actuator (10) to spray the plants with a suitable quantity of suitable liquids and/or cut the plants.

In even further embodiments, the at least partially autonomous robot may be given by a domestic appliance (not shown), like e.g. a washing machine, a stove, an oven, a microwave, or a dishwasher. The sensor (30), e.g., an optical sensor, may detect a state of an object which is to undergo processing by the household appliance. For example, in the case of the domestic appliance being a washing machine, the sensor (30) may detect a state of the laundry inside the washing machine. The control signal (A) may then be determined depending on a detected material of the laundry.

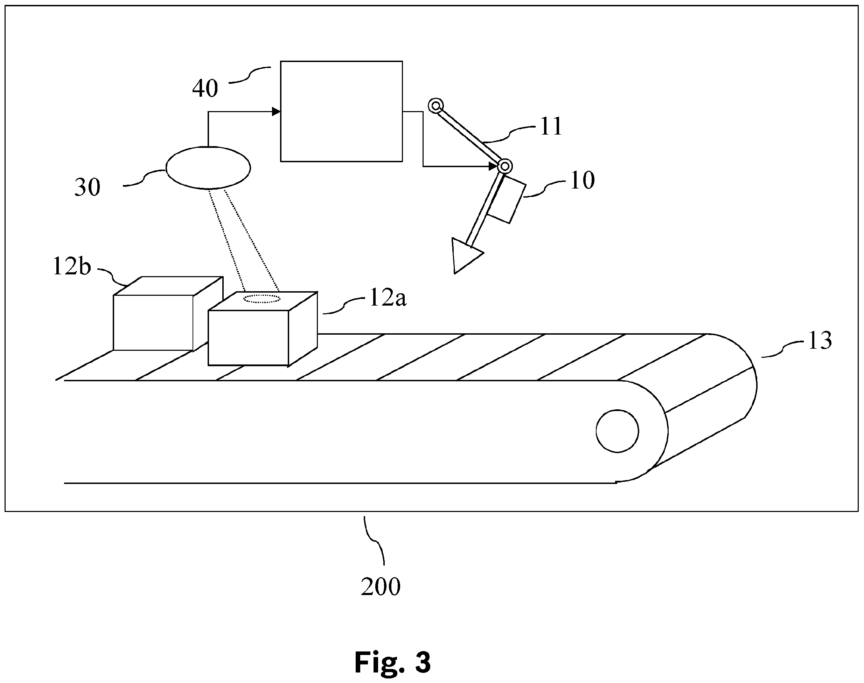

Shown in figure 3 is an embodiment in which the control system (40) is used to control a manufacturing machine (11), e.g., a punch cutter, a cutter, a gun drill or a gripper, of a manufacturing system (200), e.g., as part of a production line. The manufacturing machine may comprise a transportation device, e.g., a conveyer belt or an assembly line, which moves a manufactured product (12). The control system (40) controls an actuator (10), which in turn controls the manufacturing machine (11).

The sensor (30) may be given by an optical sensor which captures properties of, e.g., a manufactured product (12). The neural network (60) may hence be understood as an image classifier.

The image classifier (60) may determine a position of the manufactured product (12) with respect to the transportation device. The actuator (10) may then be controlled depending on the determined position of the manufactured product (12) for a subsequent manufacturing step of the manufactured product (12). For example, the actuator (10) may be controlled to cut the manufactured product at a specific location of the manufactured product itself. Alternatively, it may be envisioned that the image classifier (60) classifies, whether the manufactured product is broken or exhibits a defect. The actuator (10) may then be controlled as to remove the manufactured product from the transportation device.

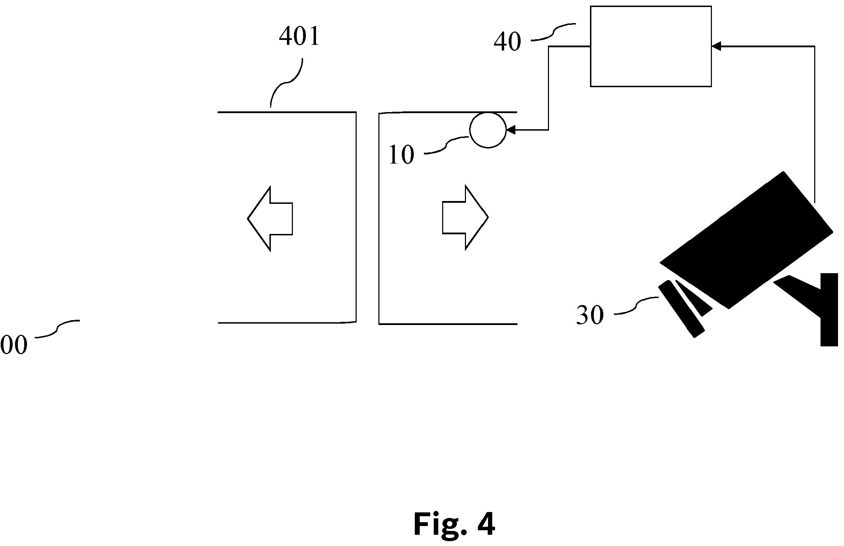

Shown in figure 4 is an embodiment in which the control system (40) is used for controlling an automated personal assistant (250). The sensor (30) may be an optic sensor, e.g., for receiving video images of a gestures of a user (249). Alternatively, the sensor (30) may also be an audio sensor, e.g., for receiving a voice command of the user (249).

The control system (40) then determines control signals (A) for controlling the automated personal assistant (250). The control signals (A) are determined in accordance with the sensor signal (S) of the sensor (30). The sensor signal (S) is transmitted to the control system (40). For example, the classifier (60) may be configured to, e.g., carry out a gesture recognition algorithm to identify a gesture made by the user (249). The control system (40) may then determine a control signal (A) for transmission to the automated personal assistant (250). It then transmits the control signal (A) to the automated personal assistant (250).

For example, the control signal (A) may be determined in accordance with the identified user gesture recognized by the neural network (60). It may comprise information that causes the automated personal assistant (250) to retrieve information from a database and output this retrieved information in a form suitable for reception by the user (249).

In further embodiments, it may be envisioned that instead of the automated personal assistant (250), the control system (40) controls a domestic appliance (not shown) controlled in accordance with the identified user gesture. The domestic appliance may be a washing machine, a stove, an oven, a microwave or a dishwasher.

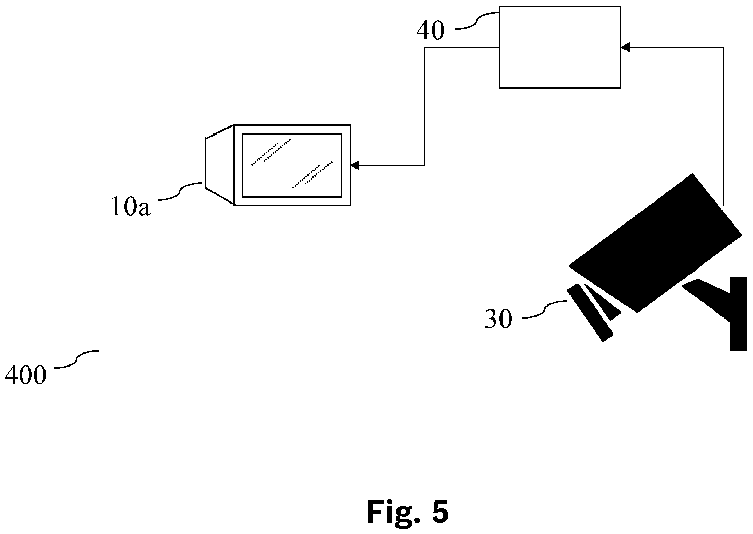

Shown in figure 5 is an embodiment in which the control system (40) controls an access control system (300). The access control system (300) may be designed to physically control access. It may, for example, comprise a door (401). The sensor (30) can be configured to detect a scene that is relevant for deciding whether access is to be granted or not. It may, for example, be an optical sensor for providing image or video data, e.g., for detecting a person's face. The neural network (60) may hence be understood as an image classifier.

The image classifier (60) may be configured to classify an identity of the person, e.g., by matching the detected face of the person with other faces of known persons stored in a database, thereby determining an identity of the person. The control signal (A) may then be determined depending on the classification of the image classifier (60), e.g., in accordance with the determined identity. The actuator (10) may be a lock which opens or closes the door depending on the control signal (A). Alternatively, the access control system (300) may be a non-physical, logical access control system. In this case, the control signal may be used to control the display (10a) to show information about the person's identity and/or whether the person is to be given access.

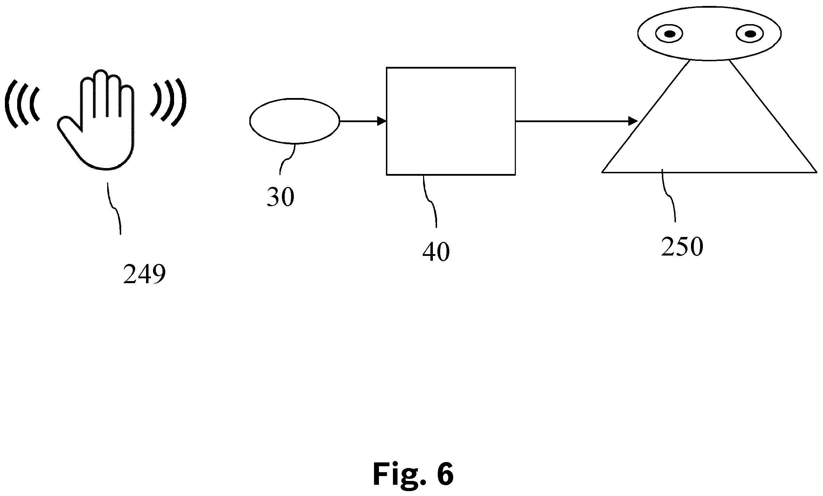

Shown in figure 6 is an embodiment in which the control system (40) controls a surveillance system (400). This embodiment is largely identical to the embodiment shown in figure 5. Therefore, only the differing aspects will be described in detail. The sensor (30) is configured to detect a scene that is under surveillance. The control system (40) does not necessarily control an actuator (10), but may alternatively control a display (10a). For example, the image classifier (60) may determine a classification of a scene, e.g., whether the scene detected by an optical sensor (30) is normal or whether the scene exhibits an anomaly. The control signal (A), which is transmitted to the display (10a), may then, for example, be configured to cause the display (10a) to adjust the displayed content dependent on the determined classification, e.g., to highlight an object that is deemed anomalous by the image classifier (60).

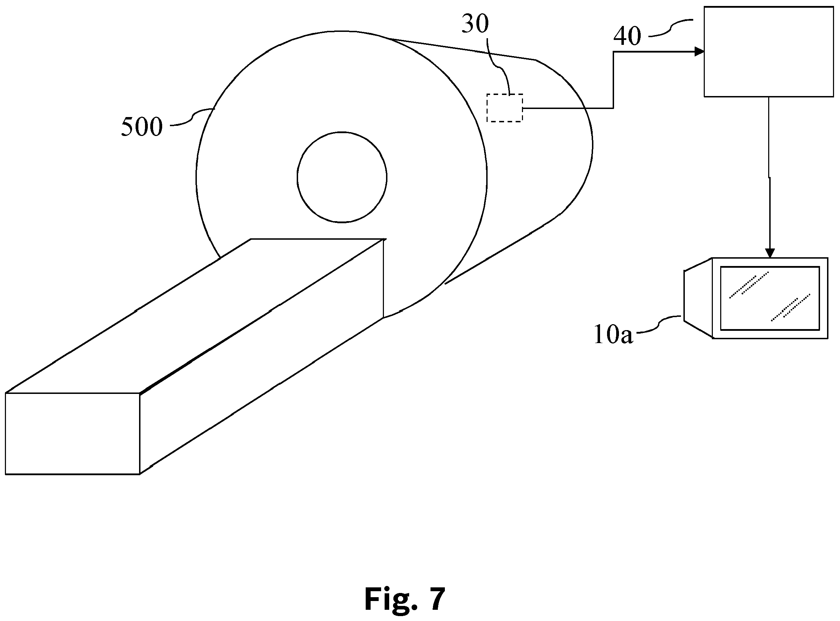

Shown in figure 7 is an embodiment of a medical imaging system (500) controlled by the control system (40). The imaging system may, for example, be an MRI apparatus, x-ray imaging apparatus or ultrasonic imaging apparatus. The sensor (30) may, for example, be an imaging sensor which takes at least one image of a patient, e.g., displaying different types of body tissue of the patient.

The neural network (60) may then determine a classification of at least a part of the sensed image. The at least part of the image is hence used as input image (x) to the neural network (60). The neural network (60) may hence be understood as an image classifier.

The control signal (A) may then be chosen in accordance with the classification, thereby controlling a display (10a). For example, the image classifier (60) may be configured to detect different types of tissue in the sensed image, e.g., by classifying the tissue displayed in the image into either malignant or benign tissue. This may be done by means of a semantic segmentation of the input image ($x$) by the image classifier (60). The control signal (A) may then be determined to cause the display (10a) to display different tissues, e.g., by displaying the input image ($x$) and coloring different regions of identical tissue types in a same color.

In further embodiments (not shown) the imaging system (500) may be used for non-medical purposes, e.g., to determine material properties of a workpiece. In these embodiments, the image classifier (60) may be configured to receive an input image ($x$) of at least a part of the workpiece and perform a semantic segmentation of the input image ($x$), thereby classifying the material properties of the workpiece. The control signal (A) may then be determined to cause the display (10a) to display the input image ($x$) as well as information about the detected material properties.

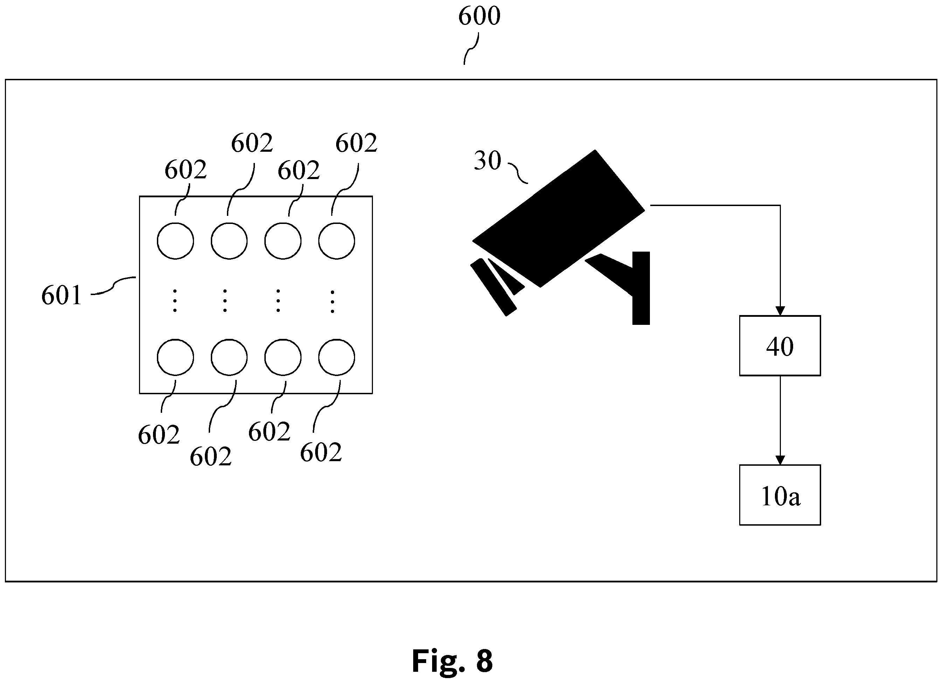

Shown in figure 8 is an embodiment of a medical analysis system (600) being controlled by the control system (40). The medical analysis system (600) is supplied with a microarray (601), wherein the microarray comprises a plurality of spots (602, also known as features) which have been exposed to a medical specimen. The medical specimen may, for example, be a human specimen or an animal specimen, e.g., obtained from a swab.

The microarray (601) may be a DNA microarray or a protein microarray.

The sensor (30) is configured to sense the microarray (601). The sensor (30) is preferably an optical sensor such as a video sensor. The neural network (60) may hence be understood as an image classifier.

The image classifier (60) is configured to classify a result of the specimen based on an input image ($x$) of the microarray supplied by the sensor (30). In particular, the image classifier (60) may be configured to determine whether the microarray (601) indicates the presence of a virus in the specimen.

The control signal (A) may then be chosen such that the display (10a) shows the result of the classification.

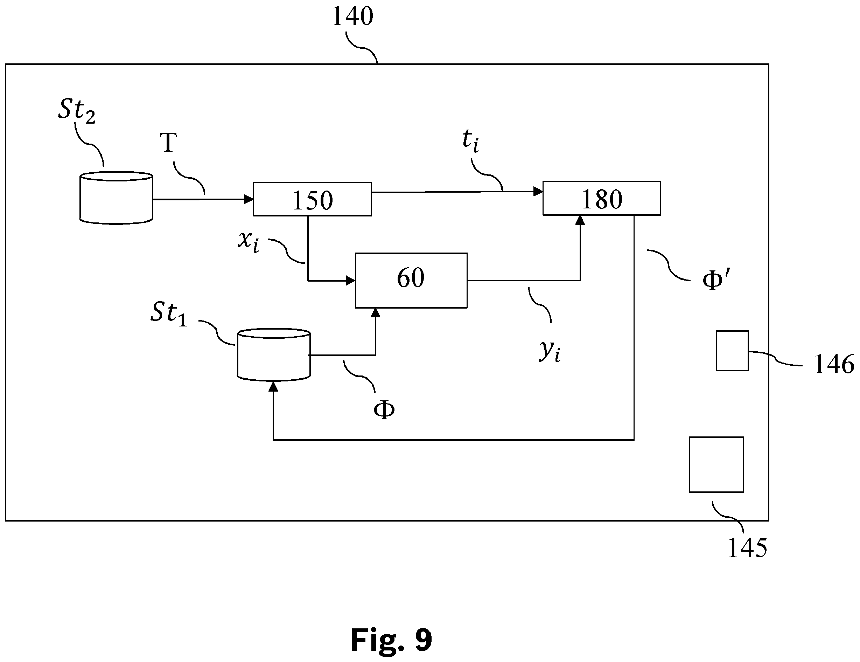

Figure 9 shows an embodiment of a training system (140) for training the neural network (60) of the control system (40) by means of a training data set (T). The training data set (T) comprises a plurality of input signals ($x_i$) which are used for training the neural network (60), wherein the training data set (T) further comprises, for each input signal ($x_i$), a desired output signal ($t_i$) which corresponds to the input signal ($x_i$) and characterizes a classification of the input signal ($x_i$).

For training, a training data unit (150) accesses a computer-implemented database ($St_2$), the database ($St_2$) providing the training data set (T). The training data unit (150) determines from the training data set (T) preferably randomly at least one input signal ($x_i$) and the desired output signal ($t_i$) corresponding to the input signal ($x_i$) and transmits the input signal ($x_i$) to the neural network (60). The neural network (60) determines an output signal ($y_i$) based on the input signal ($x_i$).

The desired output signal ($t_i$) and the determined output signal ($y_i$) are transmitted to a modification unit (180).

Based on the desired output signal ($t_i$) and the determined output signal ($y_i$), the modification unit (180) then determines new parameters ($\Phi'$) for the neural network (60). For this purpose, the modification unit (180) compares the desired output signal ($t_i$) and the determined output signal ($y_i$) using a loss function. The loss function determines a first loss value that characterizes how far the determined output signal ($y_i$) deviates from the desired output signal ($t_i$). In the given embodiment, a negative log-likelihood function is used as the loss function. Other loss functions are also conceivable in alternative embodiments.

Furthermore, it is conceivable that the determined output signal ($y_i$) and the desired output signal ($t_i$) each comprise a plurality of sub-signals, for example in the form of tensors, wherein a sub-signal of the desired output signal ($t_i$) corresponds to a sub-signal of the determined output signal ($y_i$). It is conceivable, for example, that the neural network (60) is configured for object detection and a first sub-signal characterizes a probability of occurrence of an object with respect to a part of the input signal ($x_i$) and a second sub-signal characterizes the exact position of the object. If the determined output signal ($y_i$) and the desired output signal ($t_i$) comprise a plurality of corresponding sub-signals, a second loss value is preferably determined for each corresponding sub-signal by means of a suitable loss function and the determined second loss values are suitably combined to form the first loss value, for example by means of a weighted sum.

The modification unit (180) determines the new parameters ($\Phi'$) based on the first loss value. In the given embodiment, this is done using a gradient descent method, preferably stochastic gradient descent, Adam, or AdamW. In further embodiments, training may also be based on an evolutionary algorithm.

In other preferred embodiments, the described training is repeated iteratively for a predefined number of iteration steps or repeated iteratively until the first loss value falls below a predefined threshold value. Alternatively or additionally, it is also conceivable that the training is terminated when an average first loss value with respect to a test or validation data set falls below a predefined threshold value. In at least one of the iterations the new parameters ($\Phi'$) determined in a previous iteration are used as parameters ($\Phi$) of the neural network (60).

Furthermore, the training system (140) may comprise at least one processor (145) and at least one machine-readable storage medium (146) containing instructions which, when executed by the processor (145), cause the training system (140) to execute a training method according to one of the aspects of the invention.

The term "computer" may be understood as covering any devices for the processing of pre-defined calculation rules. These calculation rules can be in the form of software, hardware or a mixture of software and hardware.

In general, a plurality can be understood to be indexed, that is, each element of the plurality is assigned a unique index, preferably by assigning consecutive integers to the elements contained in the plurality. Preferably, if a plurality comprises $N$ elements, wherein $N$ is the number of elements in the plurality, the elements are assigned the integers from 1 to $N$. It may also be understood that elements of the plurality can be accessed by their index.

**Claims**

1. Neural network (60) configured for determining an output signal ($y$) characterizing an analysis of an image ($x$), wherein determining the output signal ($y$) is based on an output determined by a denoising layer of the neural network (60), wherein the output is determined for an input of the denoising layer, wherein the input is based on the image ($x$), and wherein magnitudes of local gradients of the output do not exceed a predefined first threshold and a distance from the output to the input of the layer does not exceed a predefined second threshold.

2. Neural network (60) according to claim 1, wherein the layer output is a result of solving a constrained optimization problem, wherein the objective function is **characterized by** local gradients of the layer output and the first threshold and a constrained is **characterized by** the distance and the second threshold.

3. Neural network (60) according to claim 2, wherein the constrained optimization problem is **characterized by** the formula:

$$\underset{J}{\mathrm{argmin}} \int_{\Omega} \max(\|\nabla J(x)\|_2, \alpha)\mathrm{d}x$$

$$s.t. \|J - I\|_2^2 \le \rho^2.$$

4. Computer-implemented method for determining an output signal ($y$) characterizing an analysis of an image ($x$), wherein the output signal ($y$) is determined by providing the image ($x$) to a neural network (60) according to any one of the claims 1 to 3.

5. Method according to claim 4, wherein a control signal (A) for an actuator (10) of a technical system (100, 200, 300, 400, 500, 600) is determined based on the output signal ($y$).

6. Computer-implemented method for training a neural network (60) according to any one of the claims 1 to 3, wherein training is based on a gradient descent algorithm.

7. Method according to claim 6, wherein a gradient of the denoising layer is determined according to the formula

$$\mathrm{D}J^T\eta = 2\mu^\star\xi_1 + 2(\delta^\star)^T\xi_2$$

with

$$\delta^\star = J^\star - I,$$

$$\xi_1 = \frac{(\delta^\star)^T L^{-1}\eta}{2(\delta^\star)^T L^{-1}\delta^\star},$$

$$\xi_2 = L^{-1}\eta - 2L^{-1}\delta^\star\xi_1,$$

$$L := 2\mu^\star - \text{div}\left(\frac{1}{2\lambda^\star + \alpha}\pi_{g^\star}\right)\nabla.$$

8. Training system (140), which is configured to carry out the training method according to claim 6 or 7.

9. Computer program that is configured to cause a computer to carry out the method according to any one of the claims 4 to 7 with all of its steps if the computer program is carried out by a processor (45, 145).

10. Machine-readable storage medium (46, 146) on which the computer program according to claim 9 is stored.

**Amended claims in accordance with Rule 137(2) EPC.**

1. Neural network (60) configured for determining an output signal ($y$) characterizing an analysis of an image ($x$), wherein determining the output signal ($y$) is based on an output determined by a denoising layer of the neural network (60), wherein the output is determined for an input of the denoising layer, wherein the input is based on the image ($x$), and wherein magnitudes of local gradients of the output do not exceed a predefined first threshold and a distance from the output to the input of the layer does not exceed a predefined second threshold.

2. Neural network (60) according to claim 1, wherein the layer output is a result of solving a constrained optimization problem, wherein the objective function is **characterized by** local gradients of the layer output and the first threshold and a constrained is **characterized by** the distance and the second threshold.

3. Neural network (60) according to claim 2, wherein the constrained optimization problem is **characterized by** the

   formula: $\displaystyle \operatorname*{argmin}_J \int_\Omega \max(\|\nabla J(x)\|_2, \alpha)\,\mathrm{d}x$

   $$s.\,t.\,\|J - I\|_2^2 \le \rho^2,$$

   wherein $J$ characterizes a channel of the output of the denoising layer, $\nabla J(x)$ characterizes a local gradient of the output at a width and height location $x$, $\alpha$ characterizes the first threshold, $\rho$ characterizes the second threshold and $I$ characterizes the input of the denoising layer.

4. Computer-implemented method for determining an output signal ($y$) characterizing an analysis of an image ($x$), wherein the output signal ($y$) is determined by providing the image ($x$) to a neural network (60) according to any one of the claims 1 to 3.

5. Method according to claim 4, wherein a control signal (A) for an actuator (10) of a technical system (100, 200, 300, 400, 500, 600) is determined based on the output signal ($y$).

6. Computer-implemented method for training a neural network (60) according to any one of the claims 1 to 3, wherein training is based on a gradient descent algorithm.

7. Method according to claim 6, wherein a gradient of the denoising layer is determined according to the formula

   $$\mathrm{D}J^T\eta = 2\mu^\star\xi_1 + 2(\delta^\star)^T\xi_2$$

   with

   $$\delta^\star = J^\star - I,$$

$$\xi_1 = \frac{(\delta^\star)^T L^{-1} \eta}{2(\delta^\star)^T L^{-1} \delta^\star},$$

$$\xi_2 = L^{-1}\eta - 2L^{-1}\delta^\star \xi_1,$$

$$L := 2\mu^\star - \mathrm{div}\left(\frac{1}{2\lambda^\star + \alpha}\pi_{g^\star}\right)\nabla,$$

wherein D$J$ is the Jacobian of $J$, $\eta$ is an error signal provided to the denoising layer and $\mu^*, \delta^*, J^*$, and $g^*$ are the respective elements of a KKT-Point.

8. Training system (140), which is configured to carry out the training method according to claim 6 or 7.

9. Computer program that is configured to cause a computer to carry out the method according to any one of the claims 4 to 7 with all of its steps if the computer program is carried out by a processor (45, 145).

10. Machine-readable storage medium (46, 146) on which the computer program according to claim 9 is stored.

**Fig. 1**

**Fig. 2**

EP 4 141 808 A1

Fig. 3

Fig. 4

**Fig. 5**

**Fig. 6**

**Fig. 7**

EP 4 141 808 A1

**Fig. 8**

EP 4 141 808 A1

**Fig. 9**

EP 4 141 808 A1

**EP 4 141 808 A1**

## EUROPEAN SEARCH REPORT

Application Number

EP 21 19 2740

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | XIE CIHANG ET AL: "Feature Denoising for Improving Adversarial Robustness", 2019 IEEE/CVF CONFERENCE ON COMPUTER VISION AND PATTERN RECOGNITION (CVPR), IEEE, 15 June 2019 (2019-06-15), pages 501-509, XP033687455, DOI: 10.1109/CVPR.2019.00059 [retrieved on 2020-01-08] * page 503, column 1; figure 3 * * page 503, column 2, paragraph 1 – paragraph 2 * | 1-10 | INV. G06V10/82 |
| A | KIRTHI SHANKAR SIVAMANI: "Feature Losses for Adversarial Robustness", ARXIV.ORG, CORNELL UNIVERSITY LIBRARY, 201 OLIN LIBRARY CORNELL UNIVERSITY ITHACA, NY 14853, 10 December 2019 (2019-12-10), XP081548653, * the whole document * | 1-10 | |

TECHNICAL FIELDS SEARCHED (IPC)

G06V

The present search report has been drawn up for all claims

| Place of search | Date of completion of the search | Examiner |
|---|---|---|
| The Hague | 25 April 2022 | Stan, Johann |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **XIE et al.** Feature Denoising for Improving Adversarial Robustness. *Comp. Soc. Conf. on Computer Vision and Pattern Recognition,* 2019, https://openaccess.thecvf.com/content_CVPR_2019/papers/Xie_Feature_Denois ing_for_Improving_Adversarial_Robustness_CVPR _2019_paper.pdf

- **CHAMBOLLE ; POCK.** *A First-Order Primal-Dual Algorithm for Convex Problems with Applications to Imaging,* 2010, https://link.springer.com/content/pdf/10.1007/s10851-010-0251-1.pdf.